# EUROPEAN PATENT SPECIFICATION

(11) **EP 4 331 385 B1**
(45) Date of publication and mention of the grant of the patent: **11.12.2024**
(21) Application number: 23193047.0
(22) Date of filing: 23.08.2023
(51) Int. Cl.: A23N 1/02, B02C 13/13, B02C 13/28, C11B 1/04

(54) **IMPROVED CRUSHER AND CRUSHING MACHINE COMPRISING SAID CRUSHER**
VERBESSERTER BRECHER UND BRECHMASCHINE MIT DIESEM BRECHER
BROYEUR AMÉLIORÉ ET MACHINE DE BROYAGE COMPRENANT LEDIT BROYEUR

(30) Priority: 05.09.2022 IT 202200018102
(43) Date of publication of application: 06.03.2024
(73) Proprietor: PIERALISI MAIP SOCIETA' PER AZIONI, 60035 Jesi (AN) (IT)
(72) Inventor: PIERPAOLI, Martina, 60019 Senigallia (AN) (IT); SERVILI, Maurizio, 06036 Montefalco (PG) (IT); GIARDINIERI, Simone, 60035 Jesi (AN) (IT); STROPPA, Simone, 60044 Fabriano (AN) (IT)
(74) Representative: Baldi, Claudio

(56) References cited:
- EP-A1- 3 865 214
- CN-A- 109 395 827
- DE-A1- 2 419 835
- US-A- 2 986 347
- US-B2- 7 416 145

## Description

The present patent application for industrial invention relates to an improved crusher and to a crushing machine comprising said crusher.

The field of reference is the oil industry, that is, the field involving the processing of oleaginous fruits, such as olives and the like, for the purpose of producing oil.

As it is well known in the production of oil from olives or other vegetable oil sources, the olives or other oleaginous fruits undergo a so-called preliminary crushing treatment in order to break the fruits with the stone to produce a paste that is then used in a successive kneading process.

The present invention relates specifically to the crushing process of oleaginous fruits.

As it is known, the crushing process consists in crushing the oleaginous fruits, particularly olives, in order to release the oil contained in the vacuoles of the oil cells. Moreover, crushing releases the endogenous enzyme complement that is responsible for the formation of the chemical and sensory characteristics of the oil (lipoxygenase, glycosidase, hydrolase, polyphenol oxidase and peroxidase).

Currently, the most popular and best performing crushing machines on the market are the so-called hammer crushers, which comprise a crushing chamber where oleaginous fruits are crushed in order to obtain a paste. The crushing chamber is laterally bordered by a grille with circular cross-section wherein a rotary crusher is arranged, comprising a central hub and hammering bodies (commonly referred to as hammers) arranged around the hub, which have a flat outer edge that grazes the inner surface of the circular grille during the rotation of the rotary crusher.

The crusher is usually rotated with a rotational speed of 1400-2800 rpm and is driven by motors of 10-40 kW power.

The oleaginous fruits are crushed inside the crushing chamber until obtaining a paste that is ejected through openings (usually holes) in the grille by centrifugal force.

The crushers with flat hammers are the most widely used on the market today because they have a high mechanical strength and they are able to uninterruptedly process high quantities of product in a continuous cycle, this being a feature that complies perfectly with the current automation requirements of industrial plants.

However, from experimental studies, the applicant has noted that such crushers are impaired by several problems that particularly affect the quality, the characteristics and the organoleptic properties of the final oil. Otherwise said, the use of such crushers might negatively affect the quality aspects of virgin olive oils.

The aforementioned problems are due in particular to the configuration of the edge of the hammer. Being flat, said edge grazes the inner surface of the circular-section grille for its entire extension.

In fact, the continuous grazing of the flat edge against the inner surface of the grille results in:
- a violent and non-differentiated crushing on the various parts of the fruit (skin, pulp and stone);
- an excessive impact on the seed, resulting in an excessive release of the enzymes responsible for the oxidation of polyphenols with a consequent reduction in the quality of virgin olive oils;
- an overheating of the paste that negatively affects the quality of the oil;
- an inadequate homogeneity of the paste;
- an increased possibility of formation of water-oil emulsion due to excessive overheating of the paste and to the violent crushing of the fruits. The water-oil emulsion compromises the extraction yield and the quality of the final oil.

DE2419835A1 describes a waste crusher.

EP3865214A1 describes an olive crusher comprising a crusher with parallelepiped hammers.

The purpose of the present invention is to solve the aforementioned problems by improving the crushing technique of oleaginous fruits through a technological innovation that concerns a new hammer having the same mechanical strength as the crushers with flat hammers of the prior art (the so-called flat hammer crushers) and at the same time is able to crush the oleaginous fruits in a performant manner in order to optimize the quality of the paste and consequently of the final product.

These purposes are achieved in accordance with the invention with the features listed in the attached independent claim 1.

Advantageous achievements appear from the dependent claims.

The new crusher according to the invention is defined by claim 1.

For the sake of explanatory clarity, the description of the crusher according to the invention continues with reference to the attached drawings, which are for illustrative and non-limiting purposes only, wherein:
Fig. 1 is an axonometric view of the crusher according to the invention;
Fig. 1A is a view of the crusher of Fig. 1 with different attachment plates for the hammers;
Fig. 2 is a front view of a first hammer of the crusher according to the invention;
Fig. 3 is a front view of a second hammer of the crusher according to the invention;
Fig. 4 is a detail view of a part of a hammer of the crusher;
Fig. 5 is an axonometric view of a crushing machine comprising the crusher according to the invention;
Fig. 6 is a histogram that compares the phenolic compounds of an oil obtained by means of a preliminary crushing process with a crusher of the prior art with the phenolic compounds of an oil obtained by means of a preliminary crushing process with the crusher according to the invention;

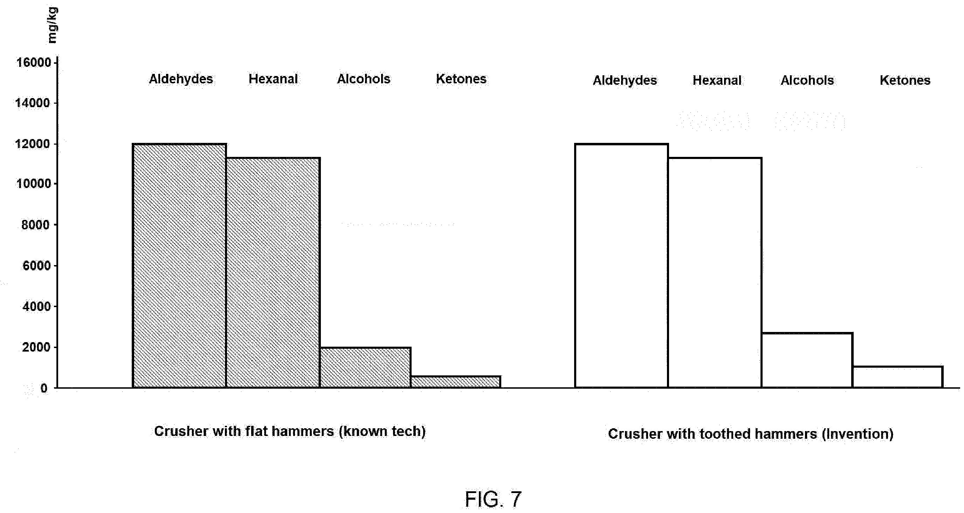

Fig. 7 is a histogram that compares the volatile components of an oil obtained by means of a preliminary crushing process with a crusher of the prior art with the volatile components of an oil obtained by means of a preliminary crushing process with the crusher according to the invention.

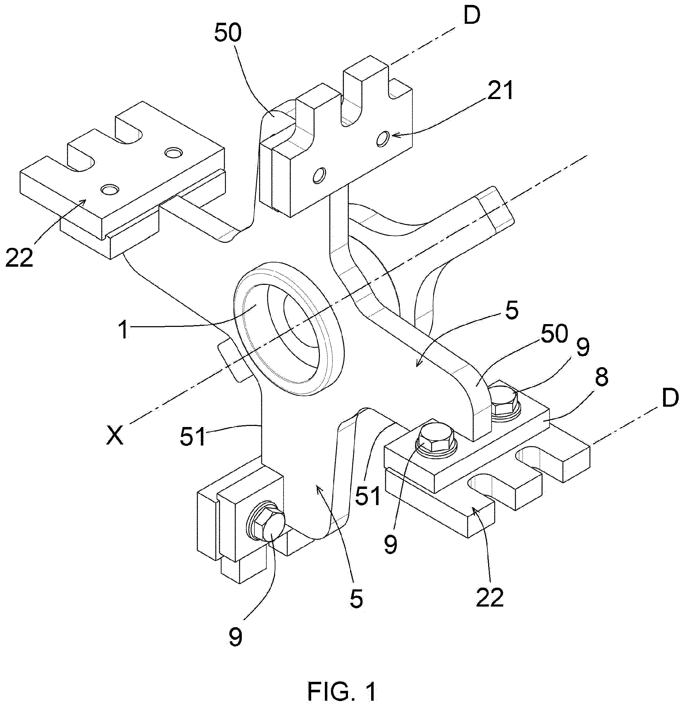

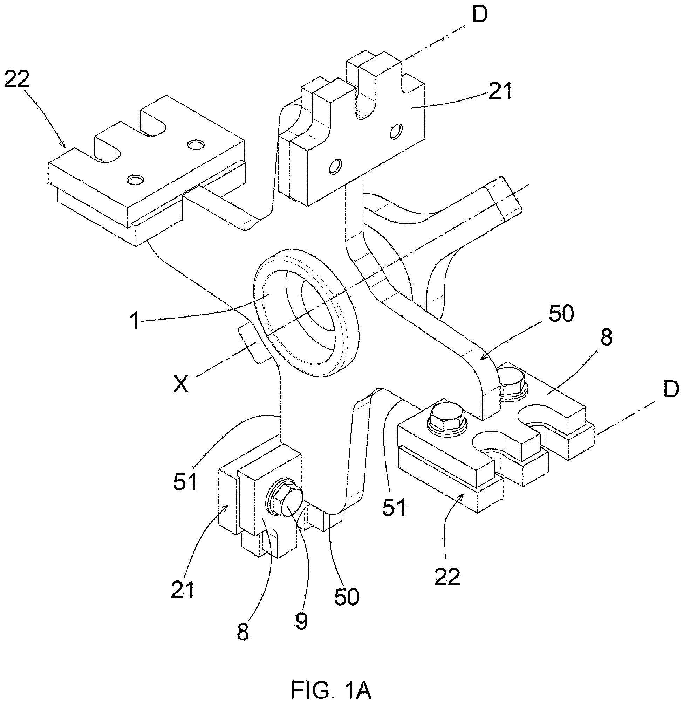

With reference to Figs. 1, 1A, 2, 3, and 4, a crusher according to the invention is described, which is collectively indicated with reference numeral 100.

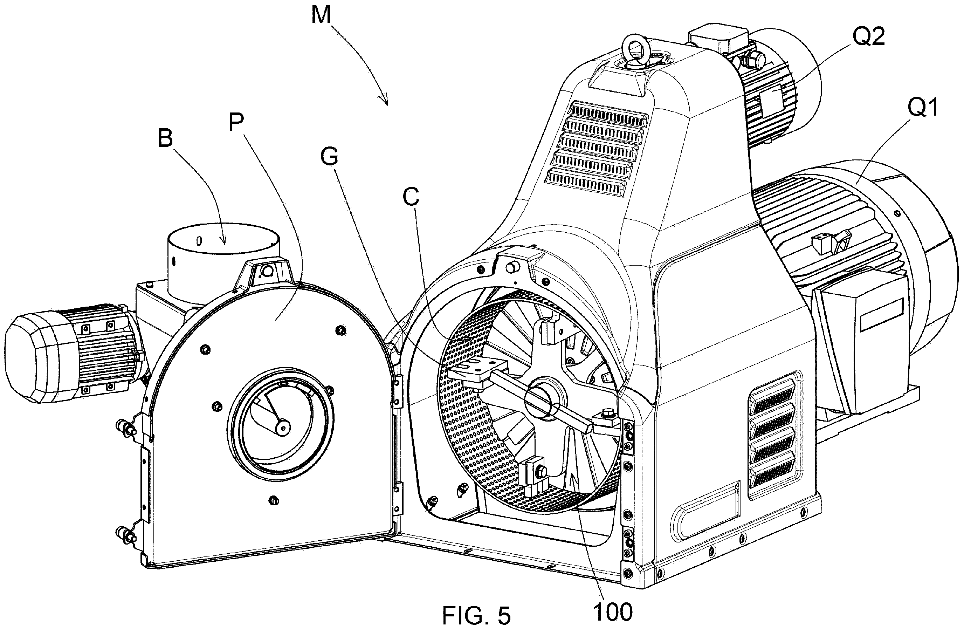

The crusher (100) according to the invention is intended to be an integral part of a crushing machine (M) shown in particular in Fig. 5.

The crushing machine (M) comprises:
- a crushing chamber (C) suitable for containing oleaginous fruits, particularly olives, to be crushed into a paste;
- a grille (G) with a circular cross-section that laterally borders the crushing chamber (C);
- the crusher (100) according to the invention arranged in the grille (G);
- rotation means (Q1, Q2) for said grille (G) and/or for said crusher (100);
- a loading hopper (B) for loading the oleaginous fruits into the crushing chamber (C); the loading mouth is connected to a front door (P) suitable for closing the crushing chamber (C);
- an unloading mouth, not shown in the attached figures, to discharge the puree obtained from crushing the oleaginous fruits.

Preferably, the rotation means (Q1, Q2) are configured to rotate the grille (G) and the crusher (100) in opposite directions. More precisely, the rotation means (Q1, Q2) include a first motor (Q1) connected to the crusher (100) and a second motor (Q2) connected to the grille (G).

The pulp discharged from the crushing machine (M) is then processed through a kneading process known to a specialist of the field.

Referring to Fig. 1, the crusher (100) comprises a central hub (1) with a central axis (X) and a plurality of hammers (21, 22), namely four hammers (21, 22), connected to the central hub (1) and arranged around the central hub (1). The hammers (21, 22) are angularly equispaced around the central hub (1).

The hammers (21, 22) are suitable for cooperating with the grille (G) with circular cross-section arranged around the crusher (100). In the attached figures, there are four hammer (21, 22), however, nothing would change for the purpose of achieving the objectives pursued by the invention if said hammers (21, 22) were fewer or more in number.

The crusher (100) further comprises a plurality of arms (5) radially extending from the hub (1). Each arm (5) comprises an end section (50) on which one of said hammers (21, 22) is disposed.

Each arm (5) comprises a front face, a rear face, and two side faces (51) on one of which an attachment plate (8) for a hammer (21, 22) is attached.

The attachment plate (8) is welded to the side face (51) of the arm at a lowered end section of the side face (51).

The hammer (21, 22) is connected to the attachment plate (8) by means of threaded connection means (9), such as bolts, so as to allow an easy replacement of the hammer (21, 22) when needed.

Each hammer (21, 22) is provided with an outer edge (20) that faces an opposite direction to the central hub (1) and is suitable for grazing the grille (G).

The outer edge (20) of each hammer (21, 22) extends lengthwise in a direction (D) parallel to the central axis (X) of the central hub (1).

The outer edge (20) of each hammer (21, 22) is toothed so that said hammer (21, 22) has at least one recess (4) and two teeth (3) separated by said recess (4).

In such a way, the outer edge (20) grazes the grille (G) only with the teeth (3) and not in correspondence with the recesses (4).

According to the invention, the teeth (3) of a hammer (21) are staggered with respect to the teeth (3) of the adjacent hammer (22) so that the portions of the grille (G) that are not grazed by a hammer (21) are grazed by another hammer (22), thus allowing the entire surface of the grille (G) to be grazed during a 360° rotation of the crusher.

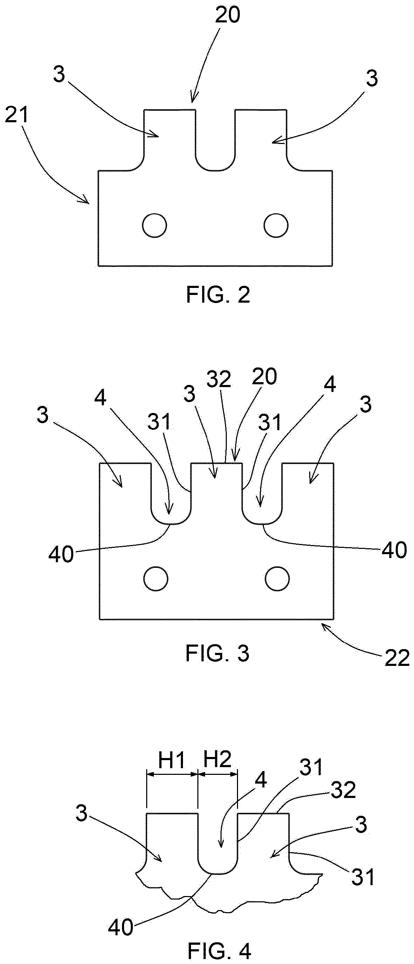

As shown in the attached figures, the hammers (21, 22) are divided into two types of alternated hammers (21, 22), namely:
- first hammers (21) comprising two teeth (3) and one recess (4) (see Fig. 2); and
- second hammers (22) comprising three teeth (3) and two recesses (4) (see Fig. 3).

According to the invention, the teeth (3) of a hammer (21) are staggered with respect to the teeth (3) of the adjacent hammer (22) so that the two teeth (3) of the first hammers (21) coincide with the two recesses (4) of the second hammers (22).

With particular reference to Fig. 4, each tooth (3) comprises two side sections (31) that are parallel to each other and an upper section (32) that is flat and orthogonal to said parallel side sections (31). The recess (4) is bordered by a U-shaped bottom (40) that is laterally connected with the two side sections (31) of the two adjacent teeth (3).

Each tooth (3) has a width (H1) and said recess (4) has a width (H2).

There is a ratio of 1.3±20% tolerance between the width (H1) of the tooth (3) and the width (H2) of the recess (4).

In a preferred embodiment shown in Fig. 1A, instead of having a substantially rectangular shape, the attachment plates (8) where the hammers (21, 22) are attached substantially have the same shape as the hammers (21, 22), but a slightly smaller dimension than the hammers (21, 22). So, also the attachment plates (8) have teeth and recesses.

The provision of attachment plates (8) with essentially the same shape as the hammers (21, 22) increases the rigidity and the strength of the hammers (21, 22).

In order to appreciate the advantages of the new crusher (100) over the crushers with flat hammers of the prior art, the applicant has carried out some tests to compare the properties of an oil obtained with an oil process using a crusher according to the prior art in the crushing stage with the properties of an oil obtained with an oil process using a crusher according to the invention in the crushing stage.

In these analyses, the phenolic compounds and the volatile compounds contained in the virgin olive oils extracted according to the two crushing techniques (crushing with a crusher with flat hammers vs. crushing with a crusher with toothed hammers) were considered as comparative elements. These chemical compounds express the main quality components for a virgin olive oil.

The phenolic compounds affect the oxidative stability by acting as antioxidants and determine the sensory and health characteristics of the virgin olive oils. The greater the phenolic fraction in the oil, the greater the oxidative stability of the oil, thus increasing its shelf-life (that is to say the time in which an oil can be marketed). In particular, there is a class of phenolic compounds that are exclusively found in virgin olive oils that is classified as "secoiridoids". Numerous studies published in well-known scientific journals show that the phenolic compounds help reduce the incidence of cardio-vascular disease and carcinomas in regular consumers of extra virgin olive oil. In addition, the phenolic compounds contribute to the organoleptic characteristics of the oil, giving a bitter and spicy flavor.

The volatile compounds contained in virgin olive oils are responsible for the aroma of the oil.

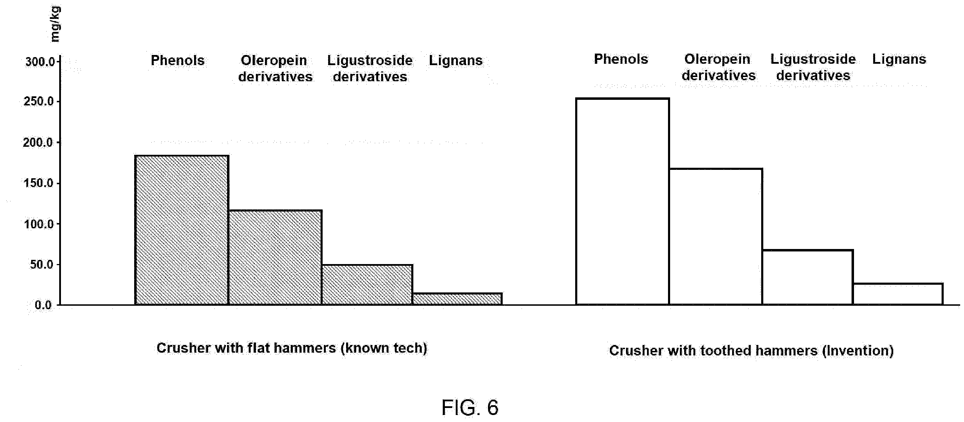

With reference to Figs. 5 and 6, two histograms are shown. Fig. 5 compares the phenolic composition of the virgin olive oils obtained with the two different crushing techniques (crushing with a crusher with flat hammers vs. crushing with a crusher with toothed hammers), whereas Fig. 6 compares the volatile composition of the oils.

The two graphs clearly show that the oil obtained with a process involving the use of the crusher (100) according to the invention is characterized by a higher content of both phenolic and volatile compounds compared to the oil obtained with a process involving the use of the crusher according to the prior art. Therefore, since the remaining part of the extraction is identical, the experiments comparing the two types of hammers in the crushing stage demonstrate a general increase in the nutritional and sensory quality of the virgin olive oil obtained with the process involving the use of the crusher (100).

As a result of the foregoing description, it is now apparent that, with the present invention, the applicant has succeeded in achieving the intended purposes, namely, to provide a crusher that has the same mechanical strength as the crushers with flat hammers of the prior art and that at the same time allows for obtaining a better quality oil.

The high mechanical strength is achieved because the crusher uses the same structural approach as the crushers of the prior art.

The improvement in the quality of the final oil is achieved because of the toothed edge (20) which allows to:
- obtain an effective crushing of the fruit skin and pulp with a less violent impact on the stone, thus limiting the oxidation of phenols and promoting the aromatic development;
- obtain an adequate homogeneity of the crushed paste;
- reduce the heating of the olive paste due to the toothed edge that generates less friction, releasing less heat when it meets and passes through the grille;
- reduce the water-oil emulsion due to a crushing technique with less impact on the stone and lower heat development.

Numerous variations and modifications of detail may be made to the present embodiment of the invention, within the reach of one skilled in the art, but still within the scope of the invention as expressed by the appended claims.

## Claims

1. Crusher (100) of a crushing machine (M) applied to oleaginous fruits, such as olives and the like; wherein said crusher (100) comprises a central hub (1) having a central axis (X) and a plurality of hammers (21, 22) connected to the central hub and arranged around the central hub (1); wherein said hammers (21, 22) are suitable for cooperating with a grille (G) having a circular cross-section arranged around the crusher (100); wherein each one of the hammers (21, 22) comprises an outer edge (20) facing a direction opposite to the central hub (1) and suitable for grazing the grille (G); wherein said outer edge (20) of the hammer extends in length in a direction (D) parallel to the central axis (X) of the central hub (1); **characterized in that** the outer edge (20) of each hammer (21, 22) is toothed in such a way that said hammer (21, 22) has at least one recess (4) and two teeth (3) separated by said recess (4)
wherein the teeth (3) of a hammer (21) are staggered with respect to the teeth (3) of the adjacent hammer (22).

2. The crusher (100) according to claim 1, wherein said hammers (21, 22) comprise a first hammer (21) and a second hammer (22) in consecutive position; wherein
- said first hammer (21) comprises two teeth (3) and one recess (4);
- said second hammer (22) comprises three teeth (3) and two recesses (4).

3. The crusher (100) according to any one of the preceding claims, wherein said hammers (21, 22) comprise:
- first hammers (21) comprising two teeth (3) and one recess (4); and
- second hammers (22) comprising three teeth (3) and two recesses (4); wherein said first hammers (21) and said second hammers (22) are alternated with each other.

4. The crusher (100) according to any one of the preceding claims, wherein each tooth (3) comprises two side sections (31) parallel to each other and an upper section (32) that is flat and orthogonal to said parallel side sections (31).

5. The crusher (100) according to any one of the preceding claims, wherein each tooth (3) has a width (H1) and said recess has a width (H2); wherein between the width (H1) of the tooth (3) and the width (H2) of the recess (4) there is a ratio of 1.3±20% tolerance.

6. The crusher (100) according to any one of the preceding claims, comprising a plurality of radial arms (5) extending radially from the central hub (1), each one comprising an end section (50) wherein one of said hammers (21, 22) is fixed.

7. The crusher (100) according to claim 6, wherein each arm (5) comprises a front face, a rear face, and two side faces (51) to one of which an attachment plate (8) for a hammer (21, 22) is attached; wherein a hammer (21, 22) is attached to the attachment plate (8) by means of threaded connection means (9).

8. The crusher (100) according to claim 7, wherein said attachment plate (8) has the same shape as the hammers (21, 22), but a lower size than the hammer (21, 22).

9. Crushing machine (M) of oleaginous fruits, such as olives and the like, comprising:
- a crushing chamber (C) suitable for containing the oleaginous fruits to be crushed into a paste;
- a grille (G) with circular cross-section that defines the crushing chamber (C) laterally;
- a crusher (100) according to any one of the preceding claims disposed in the grille (G);
- rotation means for said grille (G) and/or said crusher (100).

## Patentansprüche

1. Zerkleinerer (100) einer Zerkleinerungsmaschine (M), die für Ölsaaten wie Oliven und dergleichen verwendet wird; wobei der Zerkleinerer (100) eine zentrale Nabe (1) mit einer zentralen Achse (X) und einer Vielzahl von Schlaghämmern (21, 22) umfasst, die mit der zentralen Nabe verbunden sind und um die zentrale Nabe (1) herum angeordnet sind; wobei die Schlaghämmer (21, 22) dazu bestimmt sind, mit einem Gitter (G) mit kreisförmigem Querschnitt zusammenzuwirken, das um den Zerkleinerer (100) herum angeordnet ist; wobei jeder Schlaghammer (21, 22) einen äußeren Rand (20) umfasst, der einer der zentralen Nabe (1) entgegengesetzten Richtung zugewandt ist und dazu bestimmt ist, das Gitter (G) zu streifen; wobei der äußere Rand (20) des Schlaghammers sich längs in eine Richtung (D) parallel zur zentralen Achse (X) der zentralen Nabe (1) erstreckt; **dadurch gekennzeichnet, dass**, der äußere Rand (20) eines jeden Schlaghammers (21, 22) gezahnt ist, so dass der Schlaghammer (21, 22) mindestens eine Ausnehmung (4) und zwei Zähne (3) umfasst, die durch die Ausnehmung (4) getrennt sind; wobei die Zähne (3) eines Schlaghammers (21) versetzt in Bezug auf die Zähne (3) des benachbarten Schlaghammers (22) angeordnet sind.

2. Zerkleinerer (100) nach Anspruch 1, wobei die Schlaghämmer (21, 22) einen ersten Schlaghammer (21) und einen zweiten Schlaghammer (22) in aufeinanderfolgender Position umfassen; wobei
- der erste Schlaghammer (21) zwei Zähne (3) und eine Ausnehmung (4) umfasst;
- der zweite Schlaghammer (22) drei Zähne (3) und zwei Ausnehmungen (4) umfasst.

3. Zerkleinerer (100) nach einem der vorstehenden Ansprüche, wobei die Schlaghämmer (21, 22) umfassen:
- erste Schlaghämmer (21), umfassend zwei Zähne (3) und eine Ausnehmung (4); und
- zweite Schlaghämmer (22), umfassend drei Zähne (3) und zwei Ausnehmungen (4);
wobei sich die ersten Schlaghämmer (21) und die zweiten Schlaghämmer (22) einander abwechseln.

4. Zerkleinerer (100) nach einem der vorstehenden Ansprüche, wobei jeder Zahn (3) zwei seitliche Abschnitte (31) umfasst, die zueinander parallel sind, und einen oberen Abschnitt (32), der flach und rechtwinklig zu den parallelen seitlichen Abschnitten (31) ist.

5. Zerkleinerer (100) nach einem der vorstehenden Ansprüche, wobei jeder Zahn (3) eine Breite (H1) aufweist und die Ausnehmung eine Breite (H2) aufweist; wobei zwischen der Breite (H1) des Zahns (3) und der Breite (H2) der Ausnehmung (4) ein Toleranzverhältnis von 1,3±20% besteht.

6. Zerkleinerer (100) nach einem der vorstehenden Ansprüche, umfassend eine Vielzahl von radial angeordneten Armen, die sich radial aus der zentralen Nabe (1) erstrecken und jeweils einen Endabschnitt (50) umfassen, auf dem einer der Schlaghämmer (21, 22) befestigt ist.

7. Zerkleinerer (100) nach Anspruch 6, wobei jeder Arm (5) eine vordere Seite, eine hintere Seite und zwei seitliche Seiten (51) umfasst, wobei auf einer davon eine Anschlagplatte (8) für einen Schlaghammer (21, 22) befestigt ist; wobei ein Schlaghammer (21, 22) an der Anschlagplatte (8) mittels Gewindeverbindungsmitteln (9) befestigt ist.

8. Zerkleinerer (100) nach Anspruch 7, wobei die Anschlagplatte (8) die gleiche Form wie die Schlaghämmer (21, 22), aber eine geringere Größe als der Schlaghammer (21, 22) aufweist.

9. Zerkleinerungsmaschine (M) für Ölsaaten wie Oliven und dergleichen, umfassend:
- eine Zerkleinerungskammer (C), die dazu bestimmt ist, die zu einer Paste zu zerkleinernden Ölsaaten aufzunehmen;
- ein Gitter (G) mit kreisförmigem Querschnitt, das die Zerkleinerungskammer (C) seitlich definiert;
- einen Zerkleinerer (100) nach einem der vorstehenden Ansprüche, der im Innern des Gitters (G) angeordnet ist;
- Drehmittel für das Gitter (G) und/oder für den Zerkleinerer (100).

## Revendications

1. Broyeur (100) d'une machine de broyage (M) appliquée aux fruits oléagineux tels que les olives ou similaires ; où ledit broyeur (100) comprend un moyeu central (1) ayant un axe central (X) et une pluralité de corps batteurs (21, 22) reliés au moyeu central et disposés autour du moyeu central (1) ; où lesdits corps batteurs (21, 22) sont destinés à coopérer avec une grille (G) à section circulaire disposée autour du broyeur (100) ; où chaque corps batteur (21, 22) comprend un bord externe (20) qui est orienté vers une direction opposée au moyeu central (1) et qui est destiné à effleurer la grille (G) ; où ledit bord externe (20) du corps batteur se déploie en longueur dans une direction (D) parallèle à l'axe central (X) du moyeu central (1) ; **caractérisé en ce que** le bord externe (20) de chaque corps batteur (21, 22) est denté de façon que ledit corps batteur (21, 22) présente au moins un renfoncement (4) et deux dents (3) séparées par ledit renfoncement (4) ;
où les dents (3) d'un corps batteur (21) sont décalées par rapport aux dents (3) du corps batteur (22) adjacent.

2. Broyeur (100) selon la revendication 1, où lesdits corps batteurs (21, 22) comprennent un premier corps batteur (21) et un second corps batteur (22) consécutifs entre eux ; où
- ledit premier corps batteur (21) comprend deux dents (3) et un renfoncement (4) ;
- ledit second corps batteur (22) comprend trois dents (3) et deux renfoncements (4).

3. Broyeur (100) selon l'une quelconque des revendications précédentes, où lesdits corps batteurs (21, 22) comprennent :
- des premiers corps batteurs (21) qui comprennent deux dents (3) et un renfoncement (4) ; et
- des seconds corps batteurs (22) qui comprennent trois dents (3) et deux renfoncements (4) ;
où lesdits premiers corps batteurs (21) et lesdits seconds corps batteurs (22) sont alternés les uns aux autres.

4. Broyeur (100) selon l'une quelconque des revendications précédentes, où chaque dent (3) comprend deux segments latéraux (31) parallèles entre eux et un segment de sommet (32) plat et orthogonal aux susdits segments latéraux (31) parallèles.

5. Broyeur (100) selon l'une quelconque des revendications précédentes, où chaque dent (3) a une largeur (H1) et ledit renfoncement a une largeur (H2) ; où entre la largeur (H1) de la dent (3) et la largeur (H2) du renfoncement (4) il y a un rapport de 1,3±20% de tolérance.

6. Broyeur (100) selon l'une quelconque des revendications précédentes, comprenant une corolle comprenant une pluralité de bras (5) radiaux qui se déploient radialement depuis le moyeu central (1), chacun comprenant un segment d'extrémité (50) sur lequel est fixé un des susdits corps batteurs (21, 22).

7. Broyeur (100) selon la revendication 6, où chaque bras (5) comprend une face antérieure, une face postérieure et deux faces latérales (51) sur l'une desquelles est fixée une plaque de fixation (8) pour un corps batteur (21, 22) ; où un corps batteur (21, 22) est fixé à la plaque de fixation (8) avec des moyens de connexion filetée (9).

8. Broyeur (100) selon la revendication 7, où ladite plaque de fixation (8) a une forme en plan identique à la forme du corps batteur (21, 22) mais avec un encombrement en plan mineur du corps batteur (21, 22).

9. Machine de broyage (M) de fruits oléagineux tels que les olives ou similaires comprenant :
- une chambre de broyage (C) destinée à contenir les fruits oléagineux à broyer pour obtenir une pâte ;
- une grille (G) à section circulaire qui délimite latéralement la chambre de broyage (C) ;
- un broyeur (100) selon l'une quelconque des revendications précédentes disposé à l'intérieur de la grille (G) ;
des moyens de rotation pour ladite grille (G) et/ou pour ledit broyeur (100).
